# EUROPEAN PATENT APPLICATION

(11) **EP 4 520 471 A1**
(43) Date of publication of application: **12.03.2025**
(21) Application number: 23846409.3
(22) Date of filing: 21.07.2023
(51) Int. Cl.: B23K 31/00, B23K 9/00, B23K 26/356, C21D 1/26, C21D 1/34, C21D 1/42, C21D 7/06, C21D 9/00, C21D 9/50

(54) **TANK MANUFACTURING METHOD**

(30) Priority: 26.07.2022 JP 2022118610
(71) Applicant: Mitsubishi Shipbuilding Co., Ltd., Tokyo 108-8015 (JP)
(72) Inventor: WATANABE, Michihisa, Yokohama-shi, Kanagawa 220-8401 (JP); KUBO, Toshiyuki, Yokohama-shi, Kanagawa 220-8401 (JP)
(74) Representative: Studio Torta S.p.A.
(86) International application number: PCT/JP2023/026824
(87) International publication number: WO 2024/024679

(57) **Abstract**

Provided is a tank manufacturing method for manufacturing a tank by joint-welding steel sheets from which the tank is to be configured, the method comprising: a step for performing multilayer welding such that a plurality of weld layers are formed successively between opposing ends of the sheets toward the upper surface side of the sheets; and a step for performing a process for reducing residual stress locally only for some of the plurality of weld layers that are positioned on the upper surface side.

## Description

### Technical Field

The present disclosure relates to a manufacturing method of a tank.

Priority is claimed on Japanese Patent Application No. 2022-118610, filed July 26, 2022, the content of which is incorporated herein by reference.

### Background Art

In a case where steel materials are joined by welding, residual stress in a pulling direction occurs in a weld portion. The residual stress leads to a problem such as brittle fracture or stress corrosion cracking of the weld portion.

PTL 1 discloses a configuration in which, in a case of manufacturing a marine ultra low temperature tank, a shot peening process is performed on a weld portion. In this configuration, the residual stress in the pulling direction is offset by applying compressive stress to the weld portion via the shot peening process.

### Citation List

### Patent Literature

[PTL 1] Japanese Unexamined Patent Application Publication No. 2017-89802

### Summary of Invention

### Technical Problem

Meanwhile, in a marine liquefied gas tank in which a cargo temperature is - 10°C or lower, from a viewpoint of preventing brittle fracture, it may be required by regulations to perform a heat treatment after welding to reduce welding residual stress. In this case, a method for putting the liquefied gas tank into a heat treatment furnace to perform a heat treatment of the weld portion at once is generally used. Meanwhile, due to a restriction of a size of the heat treatment furnace, there may be a case where a large-sized liquefied gas tank cannot be heat-treated by the heat treatment furnace. In such a case, a device for performing a local residual stress reduction process, such as a heat treatment device for performing a local heat treatment, is used. For example, in the large-sized liquefied gas tank, a plate thickness of the tank is increased, but the residual stress reduction process is performed with respect to an entire plate thickness direction of the weld portion, and thus there is a problem that a work period is prolonged.

The present disclosure has been made to solve the problem, and an object of the present disclosure is to provide a manufacturing method of a tank that can effectively reduce residual stress of a weld portion.

### Solution to Problem

In order to solve the above problem, a manufacturing method of a tank according to the present disclosure is a manufacturing method of a tank for manufacturing a tank by joint-welding steel sheets constituting the tank. The manufacturing method of a tank includes a step of performing multilayer welding and a step of performing a process for locally reducing residual stress. In the step of performing the multilayer welding, the multilayer welding is performed such that a plurality of weld layers are sequentially laminated toward surface sides of the sheets facing each other between end portions of the sheets. In the step of performing the process for locally reducing the residual stress, the residual stress is locally reduced only in some weld layers positioned on the surface sides among the plurality of weld layers. Advantageous Effects of Invention

According to the manufacturing method of a tank of the present disclosure, it is possible to effectively reduce residual stress of a weld portion.

### Brief Description of Drawings

Fig. 1 is a sectional view showing an example of a tank manufactured through a manufacturing method of a tank according to an embodiment of the present disclosure.
Fig. 2 is a sectional view showing a weld portion of steel sheets constituting a tank according to a first embodiment of the present disclosure.
Fig. 3 is a flowchart showing a procedure of the manufacturing method of a tank according to the embodiment of the present disclosure.
Fig. 4 is a sectional view showing a state where an outermost weld layer is removed in the weld portion of the sheets according to the first embodiment of the present disclosure.
Fig. 5 is a sectional view showing a weld portion of sheets according to a second embodiment of the present disclosure.
Fig. 6 is a sectional view showing a weld portion of sheets according to a third embodiment of the present disclosure.
Fig. 7 is a sectional view showing a weld portion of sheets according to a fourth embodiment of the present disclosure.
Fig. 8 is a sectional view showing a weld portion of sheets according to a fifth embodiment of the present disclosure.
Fig. 9 is a sectional view showing a weld portion of sheets in a modification example according to the embodiment of the present disclosure.

### Description of Embodiments

### <First Embodiment>

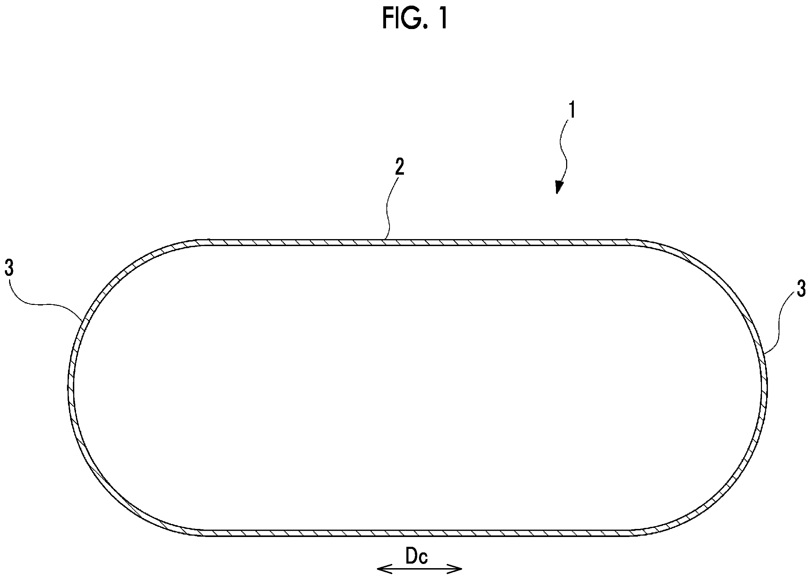

Hereinafter, a manufacturing method of a tank according to an embodiment of the present disclosure will be described with reference to Figs. 1 to 9.

### (Configuration of Tank)

As shown in Fig. 1, a tank 1 manufactured by the manufacturing method of a tank of this embodiment is, for example, a tank capable of storing a liquefied gas such as liquefied carbon dioxide. The tank 1 is installed in a hull of a ship, a floating main structure of an offshore floating structure facility, an onshore liquefied gas storage facility, or the like. The tank 1 has, for example, a cylindrical shape. The tank 1 includes a tubular portion 2, and a mirror plate portion 3. The tubular portion 2 extends in a central axis direction Dc. In this embodiment, the tubular portion 2 is formed in a cylindrical shape and has a circular cross-sectional shape orthogonal to the central axis direction Dc. The mirror plate portions 3 are respectively disposed at both end portions of the tubular portion 2 in the central axis direction Dc. Each of the mirror plate portions 3 has a hemispherical shape and blocks openings of the tubular portion 2 in the central axis direction Dc. The tank 1 is not limited to a cylindrical shape, and may have another shape such as a spherical shape, a square shape, or the like.

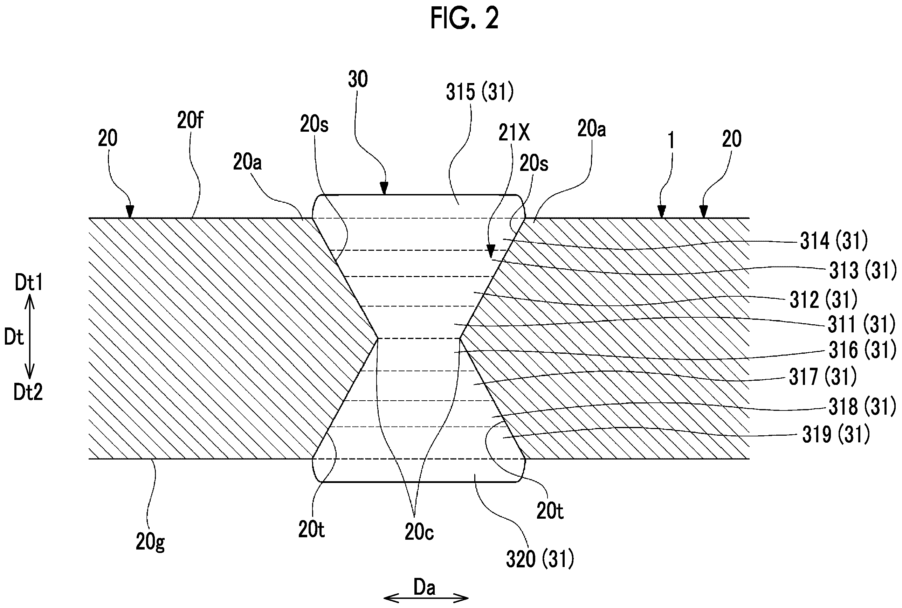

Fig. 2 is a sectional view showing a weld portion of steel sheets constituting a tank according to a first embodiment of the present disclosure.

As shown in Fig. 2, the tank 1 is formed by joint-welding a plurality of steel sheets 20. Each sheet 20 constituting the tank 1 is formed of, for example, a metallic material such as high-strength quenched and tempered steel.

In the present embodiment, the sheets 20 have a groove portion 21X having an X-shaped cross section, which is an X-shaped groove. The groove portion 21X extends in a direction (direction orthogonal to the paper surface of Fig. 2) orthogonal to a facing direction Da of the sheets 20 and a plate thickness direction Dt of the sheets 20. In the present embodiment, the case where the groove portion 21X is the X-shaped groove will be described as an example, but the present disclosure is not limited to the X-shaped groove.

End portions 20a of the sheets 20 facing each other have inclined surfaces 20s and 20t, respectively. The inclined surfaces 20s of the sheets 20 facing each other are formed such that the intervals between the inclined surfaces 20s in the facing direction Da gradually decrease from a surface 20f of a first side Dt1 in the plate thickness direction Dt toward a central portion 20c in the plate thickness direction Dt. The inclined surfaces 20t of the sheets 20 facing each other are formed such that the intervals between the inclined surfaces 20t in the facing direction Da gradually decrease from a surface 20g of a second side Dt2 in the plate thickness direction Dt toward the central portion 20c in the plate thickness direction Dt.

The end portions 20a of the sheets 20 facing each other are joined to each other through a weld portion 30. The weld portion 30 is formed between the end portions 20a of the sheets 20. The weld portion 30 is formed by multilayer welding. In the multilayer welding, the weld portion 30 is formed by repeating welding a plurality of times between the end portions 20a of the sheets 20 facing each other. The multilayer welding is suitable in a case where the amount of heat input to the sheet 20 during one welding is suppressed.

The weld portion 30 has a plurality of weld layers 31. In the present embodiment, the plurality of weld layers 31 include five weld layers 311 to 315 formed from the central portion 20c in the plate thickness direction Dt toward the first side Dt1 in the plate thickness direction Dt, and five weld layers 316 to 320 formed from the central portion 20c in the plate thickness direction Dt toward the second side Dt2 in the plate thickness direction Dt. The number of the plurality of weld layers 31 is set depending on the plate thickness of the sheet 20, and the like, and can be changed as appropriate.

In the present embodiment, the thickness of the sheet 20 in the plate thickness direction Dt is, for example, approximately 10 to 100 mm.

The weld layers 311 to 315 are laminated in order from the central portion 20c in the plate thickness direction Dt toward the surface 20f of the first side Dt1 in the plate thickness direction Dt. Among the weld layers 311 to 315, the weld layer 315 positioned closest to the first side Dt1 in the plate thickness direction Dt rises to protrude from the surface 20f of the sheet 20 toward the first side Dt1 in the plate thickness direction Dt. The weld layer 315 exemplified in the present embodiment is formed on the first side Dt1 in the plate thickness direction with respect to the surface 20f of the sheet 20.

The weld layers 316 to 320 are laminated in order from the central portion 20c in the plate thickness direction Dt toward the surface 20g of the second side Dt2 in the plate thickness direction Dt. Among the weld layers 316 to 320, the weld layer 320 positioned closest to the second side Dt2 in the plate thickness direction Dt rises to protrude from the surface 20g of the sheet 20 toward the second side Dt2 in the plate thickness direction Dt. The weld layer 320 exemplified in the present embodiment is formed on the second side Dt2 in the plate thickness direction with respect to the surface 20g of the sheet 20.

### (Procedure of Manufacturing Method of Tank)

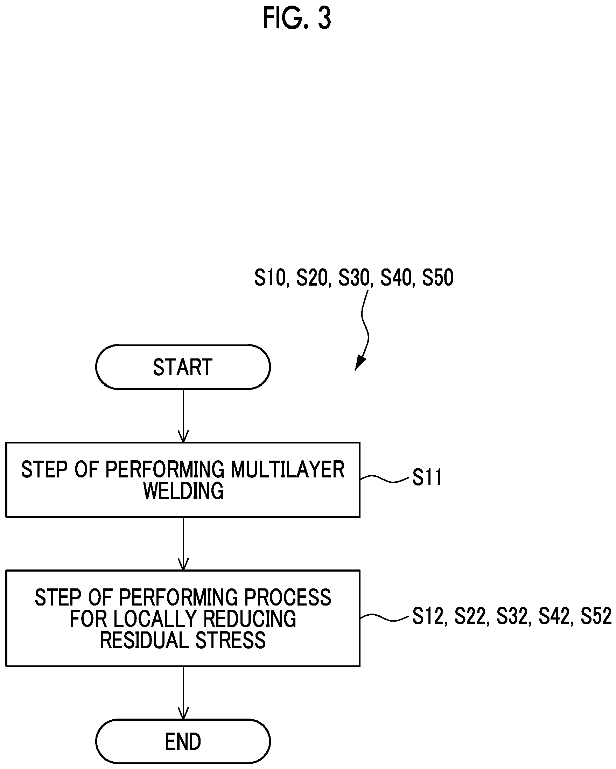

Fig. 3 is a flowchart showing a procedure of the manufacturing method of a tank according to the embodiment of the present disclosure.

As shown in Fig. 3, a manufacturing method S10 of the tank 1 according to the embodiment of the present disclosure includes a step S11 of performing the multilayer welding and a step S12 of performing the process for locally reducing the residual stress.

In the step S11 of performing the multilayer welding, as shown in Fig. 2, the multilayer welding is performed between the end portions 20a of the sheets 20 facing each other, and the sheets 20 are joined to each other. Specifically, the weld layers 311 to 315 are sequentially laminated and formed by repeating welding a plurality of times in the extending direction of the weld portion (direction orthogonal to the paper surface in Fig. 2) between the inclined surfaces 20s of the sheets 20 facing each other from the first side Dt1 in the plate thickness direction Dt. In this case, among the weld layers 311 to 315, the outermost weld layer 315 which is formed by finally performing welding and positioned closest to the first side Dt1 side (closest to the surface 20f side) in the plate thickness direction Dt is formed to rise from the surface 20f to the first side Dt1 in the plate thickness direction Dt.

In addition, the weld layers 316 to 320 are sequentially laminated and formed by repeating welding a plurality of times along the extending direction of the weld portion (direction orthogonal to the paper surface in Fig. 2) between the inclined surfaces 20t of the sheets 20 facing each other from the second side Dt2 in the plate thickness direction Dt. In this case, among the weld layers 316 to 320, the outermost weld layer 320 which is formed by finally performing welding and positioned closest to the second side Dt2 side (closest to the surface 20g side) in the plate thickness direction Dt is formed to rise from the surface 20g to the second side Dt2 in the plate thickness direction Dt.

In this way, the sheets 20 are joined to each other. As a result, the weld portion 30 in which the plurality of weld layers 31 are laminated is formed between the end portions 20a of the sheets 20 facing each other. Among the plurality of weld layers 31, residual stress is generated in the outermost weld layer 315 finally formed on the first side Dt1 in the plate thickness direction Dt and in the outermost weld layer 320 finally formed on the second side Dt2 in the plate thickness direction Dt. Among the plurality of weld layers 31, other weld layers 311 to 314 and weld layers 316 to 319 are subjected to heat input during the formation of the other weld layers 31 later, so that the residual stress is relieved.

In the step S12 of performing the process for locally reducing the residual stress, the process for locally reducing the residual stress is performed on the weld portion 30 formed in the step S11. In the step S12, the process for locally reducing the residual stress is performed on only the weld portion 30, not the entire tank 1. In the step S12, as the process for locally reducing the residual stress, the process for locally reducing the residual stress is performed only on some weld layers 31 positioned on the surface 20f side and on the surface 20g side among the plurality of weld layer 31. In the process for locally reducing the residual stress, it is preferable that the residual stress in some weld layers 31 positioned on the surface 20f side and on the surface 20g side is reduced to a predetermined level (for example, 50% or less of the yield stress of the steel material).

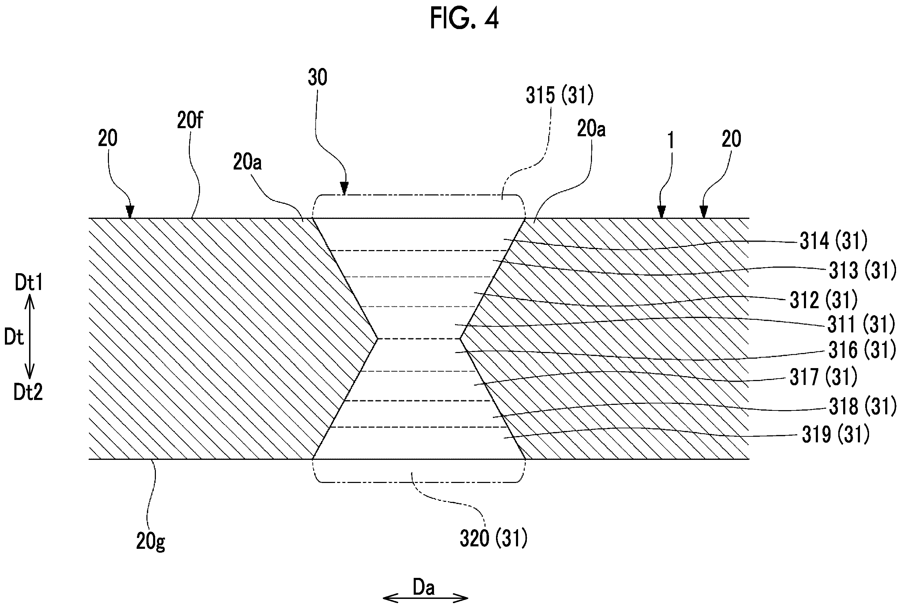

Fig. 4 is a sectional view showing a state where an outermost weld layer is removed in the weld portion of the sheets according to the first embodiment of the present disclosure.

Specifically, as shown in Fig. 4, on the first side Dt1 of the weld portion 30 in the plate thickness direction Dt, only some weld layers 31 positioned on the surface 20f side of the sheet 20 are removed. In the present embodiment, in the weld portion 30, the weld layer 315 that rises on the first side Dt1 in the plate thickness direction Dt with respect to the surface 20f is cut. The weld layer 315 can be cut by, for example, a manual tool such as a grinder. In addition, on the second side Dt2 of the weld portion 30 in the plate thickness direction Dt, only some weld layers 31 positioned on the surface 20g side of the sheet 20 are removed. In the present embodiment, in the weld portion 30, the weld layer 320 that rises on the second side Dt2 in the plate thickness direction Dt with respect to the surface 20g is cut. The weld layer 320 can also be cut by, for example, a manual tool such as a sander in the same manner as described above. As a result, the weld layer 315 and the weld layer 320, in which the heat input due to the formation of the other weld layers 31 is not performed and the residual stress is not relieved, are removed.

### (Operations and Effects)

In the manufacturing method S10 of the tank 1 according to the above embodiment, the process for reducing the residual stress of some weld layers 315 and 320 positioned on the surface 20f side and on the surface 20g side of the sheet 20, respectively, among the plurality of weld layers 31 of the weld portion 30 is performed. On the other hand, for the weld layers 311 to 314 and 316 to 319 other than the weld layers 315 and 320, the process for reducing the residual stress is not performed unlike some weld layers 315 and 320 positioned on the surface 20f side and on the surface 20g side of the sheet 20, respectively. As a result, the residual stress can be effectively reduced in the weld portion 30 formed by the multilayer welding.

In addition, in the above-described embodiment, by locally removing only some weld layers 315 and 320 positioned on the surface 20f side and on the surface 20g side of the sheet 20, it is possible to reduce the local residual stress generated in the weld portion 30.

In addition, in the above-described embodiment, the step S12 of performing the process for locally reducing the residual stress is performed only on a partial region including a portion where the multilayer welding is performed by the step S11 of performing the multilayer welding. Accordingly, it is not necessary to perform a process for reducing the residual stress on the entire tank 1. Therefore, it is not necessary to prepare a furnace or the like capable of accommodating the entire tank 1 in order to reduce the residual stress. Further, in the above-described embodiment, since the local heat treatment is not performed, the work period for manufacturing the tank 1 can be shortened. As a result, even in a case of a large-sized tank 1, the residual stress can be effectively reduced.

Further, by not performing the heat treatment, it is possible to suppress a decrease in toughness or a decrease in strength in the weld portion 30. As a result, the high-strength material can be utilized for the sheet 20, and the weight of the tank 1 can be reduced.

### <Second Embodiment>

Next, a second embodiment of the manufacturing method of a tank according to the present disclosure will be described. In the second embodiment that is described below, since only the configuration of the step of locally reducing the residual stress is different from that in the first embodiment, the same portions as those in the first embodiment are denoted by the same reference numerals with reference to Figs. 1 and 3, and overlapping description is omitted.

### (Procedure of Manufacturing Method of Tank)

As shown in Fig. 3, a manufacturing method S20 of the tank 1 according to the embodiment of the present disclosure includes the step S11 of performing the multilayer welding and a step S22 of performing the process for locally reducing the residual stress.

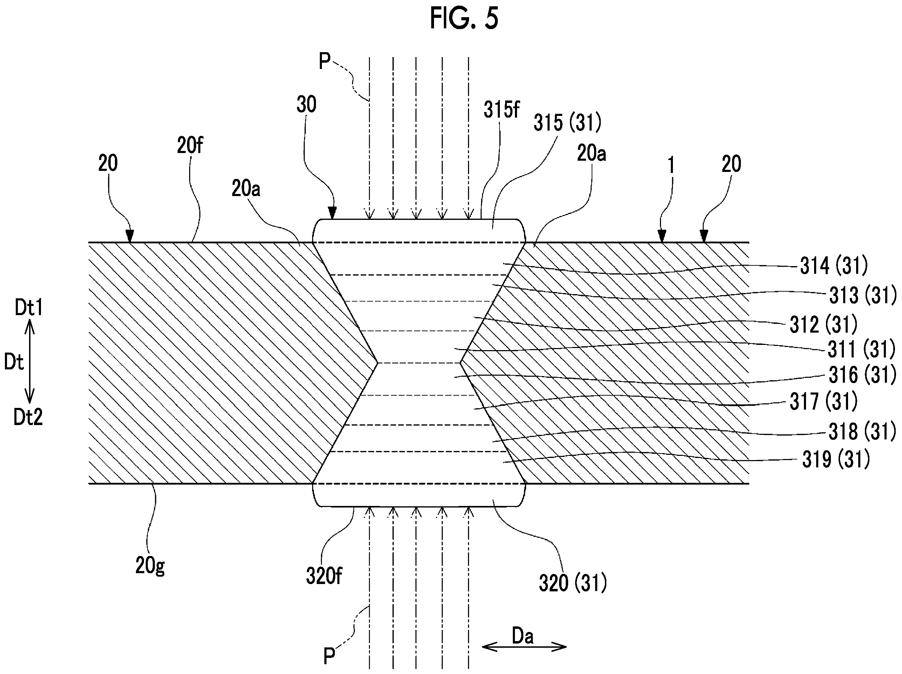

Fig. 5 is a sectional view showing a weld portion of sheets according to the second embodiment of the present disclosure.

In the step S22 of performing the process for locally reducing the residual stress in the present embodiment, as shown in Fig. 5, the process for locally reducing the residual stress is performed on the weld portion 30 formed in the step S11. In the step S22, the process for locally reducing the residual stress is performed on only the weld portion 30, not the entire tank 1. In the step S22, as the process for locally reducing the residual stress, the process for locally reducing the residual stress is performed only on some weld layers 31 positioned on the surface 20f side and on the surface 20g side among the plurality of weld layer 31. In the process for locally reducing the residual stress, it is preferable that the residual stress in some weld layers 31 positioned on the surface 20f side and on the surface 20g side is reduced to a predetermined level (for example, 50% or less of the yield stress of the steel material).

In the second embodiment, in the step S22 of performing the process for locally reducing the residual stress, the peening process is performed on only some weld layers 31 positioned on the surface 20f side and on the surface 20g side of the sheet 20 in the plate thickness direction Dt. More specifically, in the second embodiment, the peening process is performed on a surface 315f of the weld layer 315 positioned closest to the first side Dt1 in the plate thickness direction Dt in the weld portion 30. In addition, in the plate thickness direction Dt of the weld portion 30, the peening process is performed on a surface 320f of the weld layer 320 positioned closest to the second side Dt2. The peening process is performed, for example, by needle peening. The peening process on the weld layer 315 is preferably performed under a condition in which the influence of the pressure due to a needle P of the needle peening on the other weld layers 311 to 314 is suppressed as much as possible and concentrated on the weld layer 315 having high residual stress. The peening process on the weld layer 320 is preferably performed under a condition in which the influence of the pressure due to the needle P of the needle peening on the other weld layers 316 to 319 is suppressed as much as possible and concentrated on the weld layer 320 having high residual stress. As a result, the residual stress generated in each of the weld layer 315 and the weld layer 320 is reduced.

### (Operations and Effects)

In the manufacturing method S20 of the tank 1 of the above embodiment, by performing the peening process on only some weld layers 31 (315, 320) positioned on the surface 20f side and on the surface 20g side of the sheet 20, the residual stress of some weld layers 31 (315, 320) positioned on the surface 20f side and on the surface 20g side of the sheet 20 can be reduced.

In addition, also in the manufacturing method S20 of the tank 1 of the above embodiment, as in the first embodiment, by reducing the residual stress of some weld layers 31 (315, 320) positioned on the surface 20f side and on the surface 20g side of the sheet 20 among the plurality of weld layers 31, the residual stress of the weld portion 30 formed by the multilayer welding can be effectively reduced.

### <Third Embodiment>

Next, a third embodiment of the manufacturing method of the tank 1 according to the present disclosure will be described. In the third embodiment that is described below, since only the configuration of the step of locally reducing the residual stress is different from those in the first and second embodiments, the same portions as those in the first and second embodiments are denoted by the same reference numerals with reference to Figs. 1 and 3, and overlapping description is omitted.

### (Procedure of Manufacturing Method of Tank)

As shown in Fig. 3, a manufacturing method S30 of the tank 1 according to the third embodiment includes the step S11 of performing the multilayer welding and a step S32 of performing the process for locally reducing the residual stress.

In the step S32 of performing the process for locally reducing the residual stress in the present embodiment, the process for locally reducing the residual stress is performed on the weld portion 30 formed in the step S11. In the step S32, the process for locally reducing the residual stress is performed on only the weld portion 30, not the entire tank 1. In the step S32, as the process for locally reducing the residual stress, the process for locally reducing the residual stress is performed only on some weld layers 31 positioned on the surface 20f side and on the surface 20g side among the plurality of weld layer 31. In the process for locally reducing the residual stress, the residual stress in some weld layers 31 positioned on the surface 20f side and on the surface 20g side is reduced to a predetermined level (for example, 50% or less of the yield stress of the steel material).

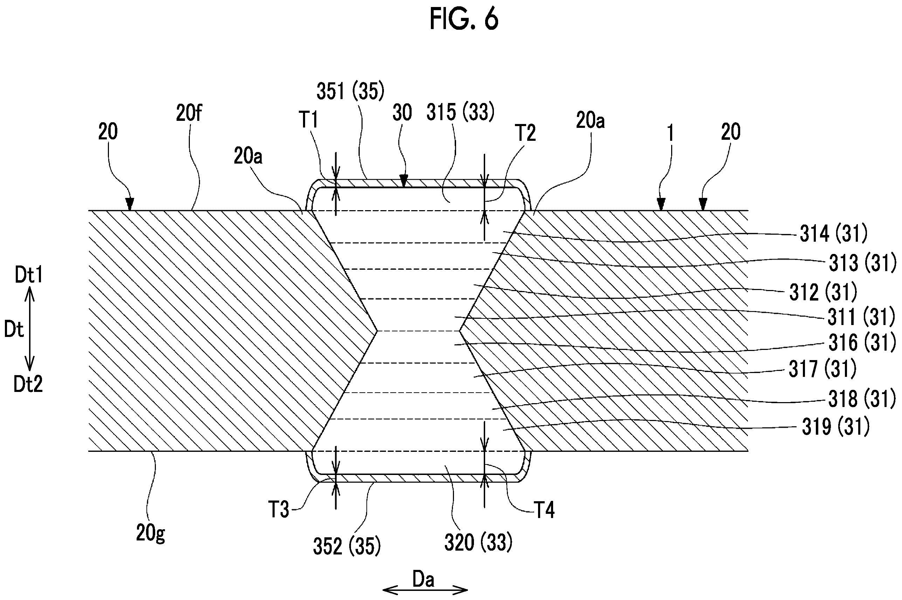

Fig. 6 is a sectional view showing a weld portion of sheets according to the third embodiment of the present disclosure.

As shown in Fig. 6, in the present embodiment, specifically, a TIG weld layer 35 is formed to perform heat input on some weld layers 31 positioned on the surface 20f side and on the surface 20g side of the sheet 20 in the plate thickness direction Dt. In the present embodiment, the TIG weld layer 35 includes a TIG weld layer 351 that covers the outermost weld layer 315 positioned closest to the first side Dt1 in the plate thickness direction Dt, and a TIG weld layer 352 that covers the outermost weld layer 320 positioned closest to the second side Dt2 in the plate thickness direction Dt. A thickness T1 of the TIG weld layer 351 is smaller than a thickness T2 of the outermost weld layer 315 in the plate thickness direction Dt. A thickness T3 of the TIG weld layer 352 is smaller than a thickness T4 of the outermost weld layer 320 in the plate thickness direction Dt. The TIG weld layers 351 and 352 are formed by tungsten inert gas (TIG) welding. In addition, the construction positions, the thicknesses, and the like of the TIG weld layers 351 and 352 are not limited to the above-described ones, and need only be managed as appropriate so that the residual stress due to the presence of the TIG weld layers 351 and 352 is not a problem. For example, in a case where the residual stress of the TIG weld layers 351 and 352 is a problem, the TIG weld layers 351 and 352 may be cut after the TIG welding.

The residual stress of the weld layer 315 is reduced by the heat input during welding for forming the TIG weld layer 351. The welding for forming the TIG weld layer 351 is preferably performed under a condition in which the influence of the heat input due to welding on the other weld layers 311 to 314 is suppressed as much as possible and concentrated on the weld layer 315 having high residual stress.

In addition, the residual stress of the weld layer 320 is reduced by the heat input during welding for forming the TIG weld layer 352. The welding for forming the TIG weld layer 352 is preferably performed under a condition in which the influence of the heat input via welding on the other weld layers 316 to 319 is suppressed as much as possible and concentrated on the weld layer 320 having high residual stress.

### (Operations and Effects)

In the manufacturing method S30 of the tank 1 of the above embodiment, heat for reducing the residual stress of the weld layers 31 (315, 320) positioned closest to the surface 20f side and to the surface 20g side to a predetermined level is applied by TIG welding for forming the TIG weld layers 351 and 352. As a result, it is possible to reduce the residual stress of some weld layers 315 and 320 positioned on the surface 20f side and on the surface 20g side of the sheet 20. In addition, in a case where the TIG weld layer 35 is formed by TIG welding, the TIG weld layer 35 can be formed to be thinner than the weld layers 315 and 320 and sufficient heat input is possible. Therefore, it is possible to suppress the residual stress in the pulling direction occurring in the TIG weld layer 35 to be small with respect to the weld layers 31 (315, 320) positioned closest to the surface 20f side and to the surface 20g side while locally reducing the residual stress. Therefore, it is possible to finally reduce the residual stress in the weld portion 30.

In addition, also in the manufacturing method S30 of the tank 1 of the above embodiment, similarly to the first and second embodiments, the residual stress of the weld portion 30 formed by the multilayer welding can be effectively reduced.

### <Fourth Embodiment>

Next, a fourth embodiment of the manufacturing method of the tank 1 according to the present disclosure will be described. In the fourth embodiment that is described below, since only the configuration of the step of locally reducing the residual stress is different from those in the first to third embodiments, the same portions as those in the first to third embodiments are denoted by the same reference numerals with reference to Figs. 1 and 3, and overlapping description is omitted.

### (Procedure of Manufacturing Method of Tank)

As shown in Fig. 3, a manufacturing method S40 of the tank 1 according to the fourth embodiment includes the step S11 of performing the multilayer welding and a step S42 of performing the process for locally reducing the residual stress.

In the step S42 of performing the process for locally reducing the residual stress in the present embodiment, the process for locally reducing the residual stress is performed on the weld portion 30 formed in the step S11. In the step S42, the process for locally reducing the residual stress is performed on only the weld portion 30, not the entire tank 1. In the step S42, as the process for locally reducing the residual stress, the process for locally reducing the residual stress is performed only on some weld layers 31 positioned on the surface 20f side and on the surface 20g side among the plurality of weld layer 31. In the process for locally reducing the residual stress, it is preferable that the residual stress in some weld layers 31 positioned on the surface 20f side and on the surface 20g side is reduced to a predetermined level (for example, 50% or less of the yield stress of the steel material).

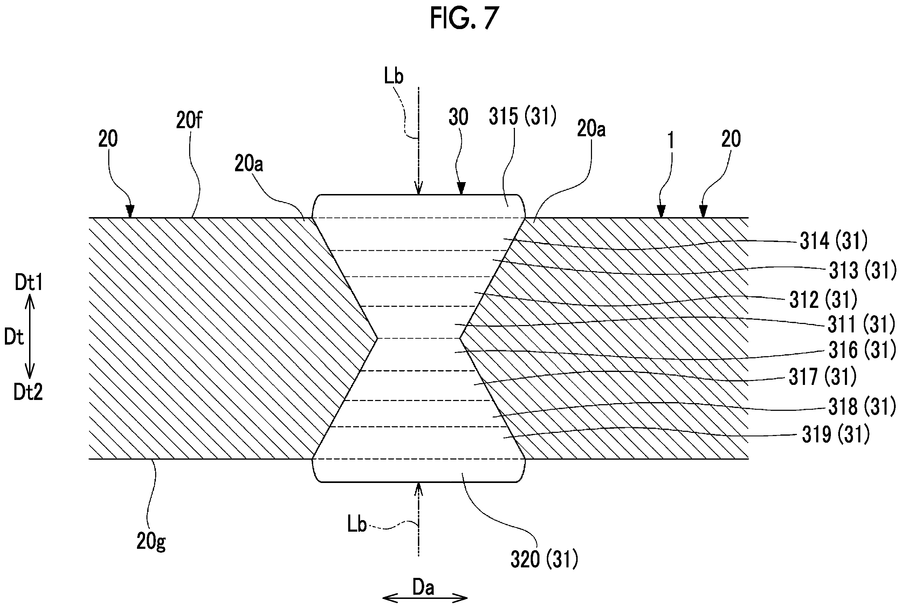

Fig. 7 is a sectional view showing a weld portion of sheets according to the fourth embodiment of the present disclosure.

As shown in Fig. 7, in the present embodiment, specifically, laser light Lb is applied to some weld layers 31 positioned on the surface 20f side and on the surface 20g side of the sheet 20 in the plate thickness direction Dt. In the present embodiment, the laser light Lb is applied to the outermost weld layer 315 that is positioned closest to the first side Dt1 in the plate thickness direction Dt from the first side Dt1 in the plate thickness direction Dt. In addition, the laser light Lb is applied to the outermost weld layer 320 that is positioned closest to the second side Dt2 in the plate thickness direction Dt from the second side Dt2 in the plate thickness direction Dt. The emission of the laser light Lb is performed by sequentially moving a laser irradiation portion (not shown) that emits the laser light Lb in a direction (direction orthogonal to the paper surface in Fig. 7) in which the weld portion 30 extends. For the application of the laser light Lb to the weld layers 315 and 320, for example, a laser device (in other words, a laser scanner) capable of scanning the laser light Lb using a galvano mirror can be used. As the laser device, for example, a welding device for performing laser welding may be used.

By irradiating the weld layers 315 and 320 with the laser light Lb, the weld layers 315 and 320 are heated, and the residual stress of the weld layers 315 and 320 is reduced. The emission of the laser light Lb is preferably performed under a condition in which the influence of the heating via the emission of the laser light Lb on the other weld layers 311 to 314 and 316 to 319 is suppressed as much as possible and concentrated on the weld layers 315 and 320 which have high residual stress.

### (Operations and Effects)

In the manufacturing method S40 of the tank 1 of the above embodiment, by applying the laser light Lb to the weld layers 315 and 320 positioned closest to the surface 20f side and to the surface 20g side, the residual stress of some weld layers 315 and 320 positioned on the surface 20f side and on the surface 20g side of the sheet 20 can be locally reduced. In addition, the heating via the emission of the laser light Lb is performed on the outermost weld layers 315 and 320 which are a part of the weld portion 30 in the plate thickness direction Dt. Therefore, it is not necessary to perform the heating on the entire weld portion 30 in the plate thickness direction Dt, and the required thermal energy is small. Therefore, it is possible to reduce the local residual stress generated in the weld portion 30 easily and at a low cost.

In addition, also in the manufacturing method S40 of the tank 1 of the above embodiment, similarly to the first to third embodiments, the residual stress of the weld portion 30 formed by the multilayer welding can be effectively reduced.

### <Fifth Embodiment>

Next, a fifth embodiment of the manufacturing method of the tank 1 according to the present disclosure will be described. In the fifth embodiment that is described below, since only the configuration of the step of locally reducing the residual stress is different from those in the first to fourth embodiments, the same portions as those in the first to fourth embodiments are denoted by the same reference numerals with reference to Figs. 1 and 3, and overlapping description is omitted.

### (Procedure of Manufacturing Method of Tank)

As shown in Fig. 3, a manufacturing method S50 of the tank 1 according to the fifth embodiment includes the step S11 of performing the multilayer welding and a step S52 of performing the process for locally reducing the residual stress.

In the step S52 of performing the process for locally reducing the residual stress in the present embodiment, the process for locally reducing the residual stress is performed on the weld portion 30 formed in the step S11. In the step S52, the process for locally reducing the residual stress is performed on only the weld portion 30, not the entire tank 1. In the step S52, as the process for locally reducing the residual stress, the process for locally reducing the residual stress is performed only on some weld layers 31 positioned on the surface 20f side and on the surface 20g side among the plurality of weld layer 31.

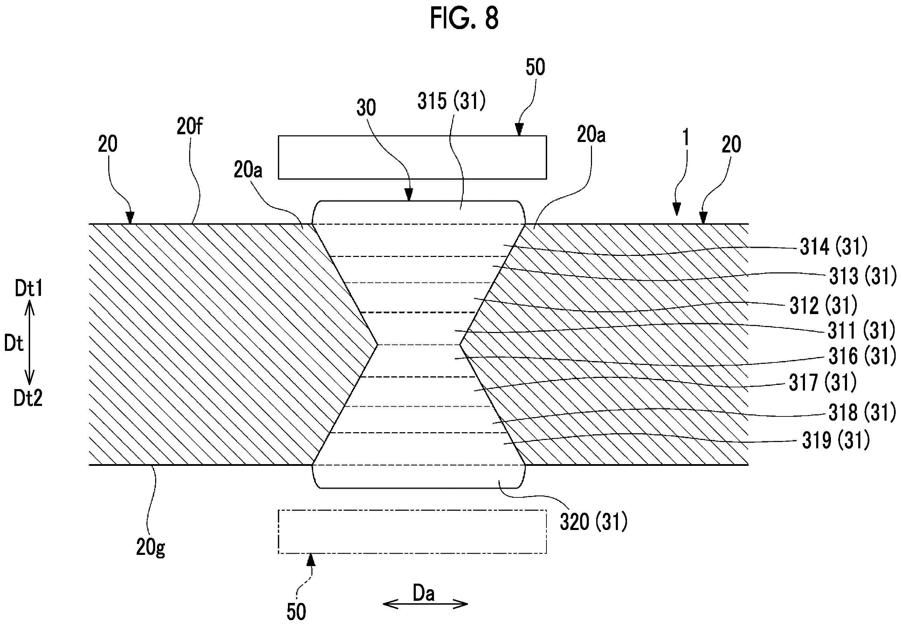

Fig. 8 is a sectional view showing a weld portion of sheets according to the fifth embodiment of the present disclosure.

As shown in Fig. 8, in the fifth embodiment, some weld layers 31 positioned on the surface 20f side and on the surface 20g side of the sheet 20 in the plate thickness direction Dt are heated by heating means 50. In the present embodiment, the heating means 50 heats the outermost weld layer 315 that is positioned closest to the first side Dt1 in the plate thickness direction Dt from the first side Dt1 in the plate thickness direction Dt. In addition, the heating means 50 heats the outermost weld layer 320 that is positioned closest to the second side Dt2 in the plate thickness direction Dt from the second side Dt2 in the plate thickness direction Dt. As the heating means 50, for example, a panel heater, a high-frequency heating device, or the like can be used. The heating via the heating means 50 is performed by sequentially moving the heating means 50 in the extending direction (direction orthogonal to the paper surface in Fig. 8) of the weld portion 30.

The heating via the heating means 50 reduces the residual stress of the weld layers 315 and 320. The heating via the heating means 50 is preferably performed under a condition in which the influence of the heating via the heating means 50 on the other weld layers 311 to 314 and 316 to 319 is suppressed as much as possible and concentrated on the weld layers 315 and 320 which have high residual stress.

### (Operations and Effects)

In the manufacturing method S50 of the tank 1 of the above embodiment, by heating the weld layers 315 and 320 positioned closest to the surface 20f side and to the surface 20g side via the heating means 50 that faces the weld layers 315 and 320 positioned closest to the surface 20f side and to the surface 20g side, the residual stress of some weld layers 315 and 320 positioned on the surface 20f side and on the surface 20g side of the sheet 20 can be reduced. In addition, since the heating via the heating means 50 needs only be performed on the outermost weld layers 315 and 320 which are a part of the weld portion 30 in the plate thickness direction Dt, it is not necessary to perform the heating on the entire weld portion 30 in the plate thickness direction Dt, and thus the required thermal energy is small. Therefore, it is possible to reduce the local residual stress generated in the weld portion 30 easily and at a low cost.

In addition, also in the manufacturing method S50 of the tank 1 of the above embodiment, similarly to the first to fourth embodiments, the residual stress of the weld portion 30 formed by the multilayer welding can be effectively reduced.

### (Other Embodiments)

The embodiments of the present disclosure have been described in detail with reference to the drawings hereinbefore. However, the specific configuration is not limited to the embodiments, and includes design changes and the like within a scope not departing from the gist of the present disclosure.

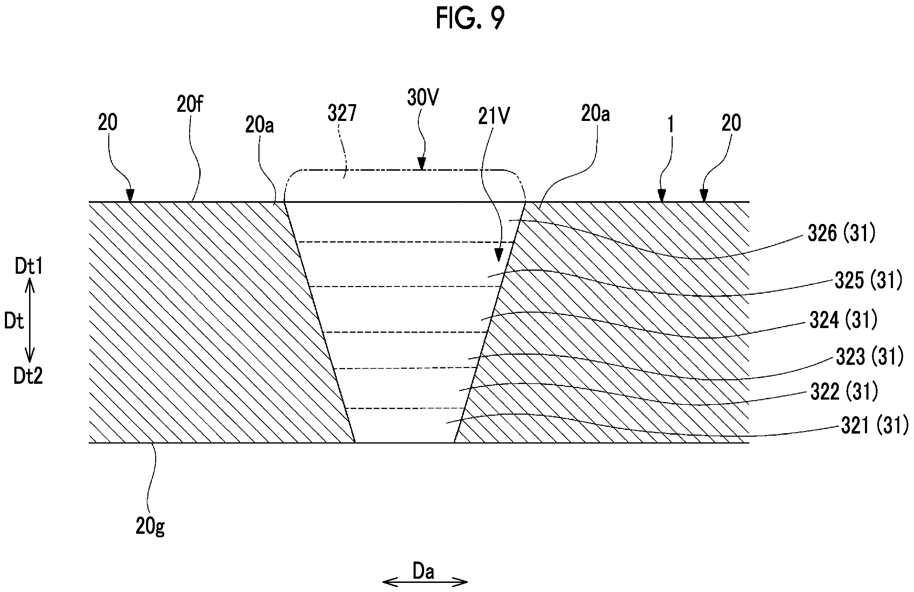

In the above embodiment, the groove portion 21X has an X-shaped cross section, but the present disclosure is not limited thereto. For example, as shown in Fig. 9, a groove portion 21V may have a V-shaped cross section. In a weld portion 30V, weld layers 321 to 327 are laminated as the plurality of weld layers 31 from the second side Dt2 toward the first side Dt1 in the plate thickness direction Dt. In this case, the residual stress of the weld layer 327 positioned closest to the surface 20f side is reduced. As a result, in the weld portion 30V formed by the multilayer welding, it is possible to effectively reduce the residual stress of the outermost weld layer 327 that is locally generated.

In addition, the configurations shown in the first to fifth embodiments can also be combined as appropriate. For example, the peening process shown in the second embodiment may be combined with the configurations shown in the first embodiment and in the third to fifth embodiments to be performed.

### <Additional Notes>

The manufacturing methods S10, S20, S30, S40, and S50 of the tank 1 described in each embodiment are, for example, understood as follows.
(1) A manufacturing method S10, S20, S30, S40, S50 of a tank 1 according to a first aspect is a manufacturing method S10 of a tank 1 for manufacturing a tank 1 by joint-welding steel sheets 20 constituting the tank 1, the manufacturing method S10 including: a step S11 of performing multilayer welding such that a plurality of weld layers 31 are sequentially laminated toward surface 20f, 20g sides of the sheets 20 of which end portions 20a face each other between the sheets 20; and a step S12 of performing a process for locally reducing residual stress only on some weld layers 31 positioned on the surface 20f, 20g sides among the plurality of weld layers 31.
   In the manufacturing methods S10, S20, S30, S40, and S50 of the tank 1, it is possible to reduce the residual stress of some weld layers 31 positioned on the surface 20f side and on the surface 20g side of the sheet 20 among the plurality of weld layers 31. Meanwhile, the influence of the process for reducing the residual stress can be suppressed with respect to the weld layers 31 other than some weld layers 31 positioned on the surface 20f side and on the surface 20g side of the sheet 20. As a result, the residual stress can be effectively reduced in the weld portion 30 formed by the multilayer welding.
(2) A manufacturing method S10 of a tank 1 according to a second aspect is the manufacturing method S10 of a tank 1 of (1), in which in the step S12 of performing the process for locally reducing the residual stress, only some weld layers 31 positioned on the surface 20f, 20g sides are removed.

Accordingly, by removing only some weld layers 31 positioned on the surface 20f side and on the surface 20g side of the sheet 20, the residual stress in some weld layers 31 positioned on the surface 20f side and on the surface 20g side can be locally reduced.

(3) A manufacturing method S20 of a tank 1 according to a third aspect is the manufacturing method S20 of a tank 1 of (1) or (2), in which in the step S22 of performing the process for locally reducing the residual stress, a peening process is performed on only some weld layers 31 positioned on the surface 20f, 20g sides.

Accordingly, by performing the peening process on only some weld layers 31 positioned on the surface 20f side and on the surface 20g side of the sheet 20, the residual stress in some weld layers 31 positioned on the surface 20f side and on the surface 20g side of the sheet 20 can be locally reduced.

(4) A manufacturing method S30 of a tank 1 according to a fourth aspect is the manufacturing method S30 of a tank 1 of any one of (1) to (3), in which in the step S32 of performing the process for locally reducing the residual stress, weld layers 31 positioned closest to the surface 20f, 20g sides are heat-input by TIG welding.

With such a configuration, by performing heat input on the weld layers 31 positioned closest to the surface 20f side and to the surface 20g side via TIG welding, the residual stress in some weld layers 31 positioned on the surface 20f side and on the surface 20g side of the sheet 20 can be locally reduced.

(5) A manufacturing method S40 of a tank 1 according to a fifth aspect is the manufacturing method S40 of a tank 1 of any one of (1) to (4), in which in the step S42 of performing the process for locally reducing the residual stress, weld layers 31 positioned closest to the surface 20f, 20g sides are irradiated with laser light Lb.

Accordingly, by irradiating the weld layers 31 positioned closest to the surface 20f side and to the surface 20g side with the laser light Lb, the residual stress in some weld layers 31 positioned on the surface 20f side and on the surface 20g side of the sheet 20 can be locally reduced.

(6) A manufacturing method S50 of a tank 1 according to a sixth aspect is the manufacturing method S50 of a tank 1 of any one of (1) to (5), in which in the step S52 of performing the process for locally reducing the residual stress, weld layers 31 positioned closest to the surface 20f, 20g sides are heated by heating means 50 that faces the weld layers 31 positioned closest to the surface 20f, 20g sides.

The heating means 50 is a panel heater or a high-frequency heating device.

Accordingly, by heating the weld layers 31 positioned closest to the surface 20f side and to the surface 20g side via the heating means 50 that faces the weld layers 31 positioned closest to the surface 20f side and to the surface 20g side, the residual stress of some weld layers 31 positioned on the surface 20f side and on the surface 20g side of the sheet 20 can be locally reduced.

(7) A manufacturing method S10, S20, S30, S40, S50 of a tank 1 according to a seventh aspect is the manufacturing method S10, S20, S30, S40, S50 of a tank 1 of any one of (1) to (6), in which the step S12, S22, S32, S42, S52 of performing the process for locally reducing the residual stress is performed only on a partial region of the tank 1 including a portion where the multilayer welding is performed by the step S11 of performing the multilayer welding.

As a result, in the tank 1, the process for locally reducing the residual stress is performed only on a partial region including the weld portion 30 which is a portion where the multilayer welding is performed. Accordingly, it is not necessary to reduce the residual stress on the entire tank 1. Therefore, it is not necessary to prepare a furnace or the like capable of accommodating the entire tank 1 in order to reduce the residual stress. In addition, since the heat treatment is not performed, the work period for manufacturing the tank 1 can be shortened. As a result, even in a case of a large-sized tank 1, the residual stress can be effectively reduced.

Further, by not performing the heat treatment, it is possible to suppress a decrease in toughness or a decrease in strength in the weld portion 30. As a result, the high-strength material can be utilized for the sheet 20, and the weight of the tank 1 can be reduced.

### Industrial Applicability

According to the manufacturing method of a tank of the present disclosure, it is possible to effectively reduce residual stress of a weld portion.

### Reference Signs List

1: tank
2: tubular portion
3: mirror plate portion
20: sheet
20a: end portion
20c: central portion
20f, 20g: surface
20s, 20t: inclined surface
21X, 21V: groove portion
30, 30V: weld portion
31, 311 to 315, 315f, 316 to 320, 320f, 321 to 327: weld layer
35, 351, 352: TIG weld layer
50: heating means
Da: facing direction
Dc: central axis direction
Dt: plate thickness direction
Dt1: first side
Dt2: second side
Lb: laser light
S10, S20, S30, S40, S50: manufacturing method of tank
S11: step of performing multilayer welding
S12, S22, S32, S42, S52: step of performing process for locally reducing residual stress
T1, T2, T3, T4: thickness

## Claims

1. A manufacturing method of a tank for manufacturing a tank by joint-welding
steel sheets constituting the tank, the manufacturing method comprising:
a step of performing multilayer welding such that a plurality of weld layers are sequentially laminated toward surface sides of the sheets facing each other between end portions of the sheets; and
a step of performing a process for locally reducing residual stress only on some weld layers positioned on the surface sides among the plurality of weld layers.

2. The manufacturing method of a tank according to Claim 1,
wherein in the step of performing the process for locally reducing the residual stress, only some weld layers positioned on the surface sides are removed.

3. The manufacturing method of a tank according to Claim 1 or 2,
wherein in the step of performing the process for locally reducing the residual stress, a peening process is performed on only some weld layers positioned on the surface sides.

4. The manufacturing method of a tank according to Claim 1 or 2,
wherein in the step of performing the process for locally reducing the residual stress, weld layers positioned closest to the surface sides are heat-input by TIG welding.

5. The manufacturing method of a tank according to Claim 1 or 2,
wherein in the step of performing the process for locally reducing the residual stress, weld layers positioned closest to the surface sides are irradiated with laser light.

6. The manufacturing method of a tank according to Claim 1 or 2,
wherein in the step of performing the process for locally reducing the residual stress, weld layers positioned closest to the surface sides are heated by heating means that faces the weld layers positioned closest to the surface sides.

7. The manufacturing method of a tank according to Claim 1 or 2,
wherein the step of performing the process for locally reducing the residual stress is performed only on a partial region of the tank including a portion where the multilayer welding is performed by the step of performing the multilayer welding.
